# DEMANDE DE BREVET EUROPEEN

(11) **EP 1 274 221 A1**
(43) Date de publication de la demande: **08.01.2003**
(21) Numéro de dépôt: 02291618.3
(22) Date de dépôt: 28.06.2002
(51) Int. Cl.: H04M 3/56, H04M 3/533, G06F 17/28

(54) **Procédé et dispositif d'aide a la communication interpersonnelle, et systéme de telecommunications incorporant un tel dispositif**

(30) Priorité: 04.07.2001 FR 0108885
(71) Demandeur: FRANCE TELECOM, 75015 Paris (FR)
(72) Inventeur: Mineur, Vincent, 22700 Perros-Guirec (FR); Gargan, Gaby, Buhulien, 22300 Lannion (FR); Laot, Andr-, 22700 Lannion (FR)
(74) Mandataire: Verdure, Stéphane

(57) **Abrégé**

L'invention propose un procédé et un dispositif d'aide à la communication interpersonnelle, permettant d'établir une communication en mode semi-duplex entre au moins un terminal (T1, T3) d'un client et au moins un terminal (T2) d'un traducteur, via des espaces vocaux (EV1, EV2, EV3) d'une entité de messagerie vocale accessibles depuis ces terminaux et sélectivement associés à ces personnes, et permettant au traducteur de déposer dans l'espace vocal associé à un client destinataire la traduction dans une autre langue d'un message vocal déposé dans l'espace vocal associé au traducteur par un client destinateur.

Application aux services offerts aux utilisateurs d'un système de télécommunications public ou privé.

## Description

La présente invention concerne un procédé et un dispositif d'aide à la communication interpersonnelle, ainsi qu'un système de télécommunications incorporant un tel dispositif.

Elle se rapporte aux méthodes et systèmes permettant d'apporter des services spécifiques aux utilisateurs d'un système de télécommunications.

Par communication interpersonnelle, on entend au sens de la présente invention la communication entre au moins deux personnes physiques, c'est-à-dire des êtres humains, par opposition à la communication de données entre des machines, des ordinateurs par exemple. La communication dont il s'agit ici est en particulier une communication orale. Cependant, l'enseignement de l'invention inclus les applications dans lesquelles tout ou partie des échanges de messages entre les personnes participant à la communication peuvent consister en des envois de documents électroniques et/ou de fichiers contenant des données de toute nature.

L'invention vise à atténuer les difficultés de communication entre des personnes employant des langues différentes pour s'exprimer. Par langues, on entend ici des langues vivantes (langues écrites et/ou parlées), à ne pas confondre avec des langages informatiques.

Dans l'art antérieur, on a recours à l'intervention d'un interprète qui écoute ce que dit le locuteur et l'interprète dans la langue de l'autre personne. C'est pourquoi, il est déjà proposé aux utilisateurs d'un système de télécommunications un service leur permettant de requérir l'intervention d'un interprète en établissant une communication à trois, entre les deux utilisateurs et un interprète qui assure alors l'interprétariat en ligne.

Néanmoins, cette solution demeure peu efficace en raison des inconvénients propres à l'interprétariat, dont la simultanéité de la traduction impose à l'interprète de commencer à traduire les propos du locuteur alors que celui-ci n'a pas encore fini de s'exprimer. Il en résulte des erreurs de traduction possibles, car le sens véritable d'un mot peut n'apparaître qu'à la lumière des propos qui suivent. Il en résulte aussi de grandes difficultés à trouver des interprètes vraiment qualifiés pour ce genre d'intervention. Il en résulte enfin une gêne pour le locuteur lui-même, qui entend également les propos de l'interprète alors qu'il est lui-même en train de s'exprimer. Ce dernier inconvénient est par ailleurs exacerbé si plus de deux personnes, employant des langues différentes respectives, doivent participer à la conversation. En effet, plusieurs interprètes sont alors requis, qui s'expriment tous en même temps, et en même temps que le locuteur. La conversation devient alors une véritable cacophonie.

Un objet de la présente invention est de pallier les inconvénients de l'art antérieur précités.

Ce but est atteint, conformément à l'invention, grâce à un procédé d'aide à la communication interpersonnelle pour les utilisateurs d'un système de télécommunications, comprenant les étapes consistant à :
- établir une communication en mode semi-duplex entre des terminaux respectifs d'un ou plusieurs clients et d'au moins un traducteur, via des espaces vocaux d'une entité de messagerie vocale simultanément accessibles en consultation et en dépôt depuis différents terminaux, et sélectivement associés audits clients et audit traducteur, en réponse à une requête d'établissement de communication exécutée par un client ; et,
- gérer l'entité de messagerie vocale en réponse à des actions d'un client destinateur, d'un client destinataire et/ou du traducteur via leurs terminaux respectifs, de manière à permettre au client destinateur de déposer dans l'espace vocal associé au traducteur un premier message vocal déterminé, à permettre en outre au traducteur de déposer dans l'espace vocal associé au client destinataire un second message vocal déterminé correspondant à la traduction dans une autre langue dudit premier message vocal déterminé, et enfin à permettre au client destinataire de consulter ledit second message vocal déterminé dans l'espace vocal associé audit client destinataire.

Les clients sont des utilisateurs (personnes physiques) du système de télécommunication. Le traducteur est de préférence également une personne physique (appelé dans la suite opérateur traducteur), bien qu'il puisse aussi s'agir d'une machine (typiquement un ordinateur piloté par un programme ad-hoc) adaptée pour effectuer la traduction d'un message vocal. Le fait d'établir la communication à travers les espaces vocaux d'une entité de messagerie vocale permet d'isoler les uns des autres les échanges de messages entre des clients respectifs et l'opérateur traducteur. De cette manière, le client destinataire bénéficie, avec un léger différé, d'une traduction du message vocal d'origine, sans que le client destinateur soit gêné par l'énoncé de cette traduction par le traducteur et, réciproquement, sans que le traducteur soit gêné par les propos du client destinateur.

L'invention propose également un dispositif d'aide à la communication interpersonnelle pour les utilisateurs d'un système de télécommunications, convenant pour la mise en oeuvre du procédé, qui comprend :
- une entité de messagerie vocale ayant des espaces vocaux simultanément accessibles en consultation et en dépôt depuis différents terminaux du système de télécommunications ;
- des moyens pour exécuter une procédure d'établissement de communication permettant d'établir une communication en mode semi-duplex entre des terminaux d'un ou plusieurs clients et d'au moins un traducteur, via des espaces vocaux de l'entité de messagerie vocale sélectivement associés audits clients et audit traducteur, en réponse à une requête d'établissement de communication exécutée par un client ; et,
- des moyens de gestion de l'entité de messagerie vocale en réponse à des actions d'un client destinateur, d'un client destinataire et/ou du traducteur via leurs terminaux respectifs, permettant au client destinateur de déposer dans l'espace vocal associé au traducteur un premier message vocal déterminé, permettant en outre au traducteur de déposer dans l'espace vocal associé au client destinataire un second message vocal déterminé correspondant à la traduction dans une autre langue dudit premier message vocal déterminé, et permettant enfin au client destinataire de consulter ledit second message vocal déterminé dans l'espace vocal associé audit client destinataire.

L'invention concerne encore un système de télécommunications, notamment un système public ou privé de télécommunications filaire et/ou radio reposant sur un réseau téléphonique ou visiophonique, un réseau de radiocommunications avec les mobiles et/ou un réseau de données, comprenant des terminaux d'utilisateurs, et un dispositif tel que défini ci-dessus relié audits terminaux via des équipements de routage de messages.

D'autres caractéristiques et avantages de l'invention apparaîtront encore à la lecture de la description qui va suivre. Celle-ci est purement illustrative et doit être lue en regard des dessins annexés, sur lesquels on a représenté :
- à la figure 1 : un schéma illustrant le principe d'un procédé et d'un dispositif selon l'invention ;
- à la figure 2 : un schéma bloc montrant des éléments constitutifs d'un dispositif selon l'invention ;
- à la figure 3 : un diagramme illustrant une procédure d'établissement d'une communication selon l'invention ; et,
- à la figure 4 : un schéma d'un système de télécommunications selon l'invention.

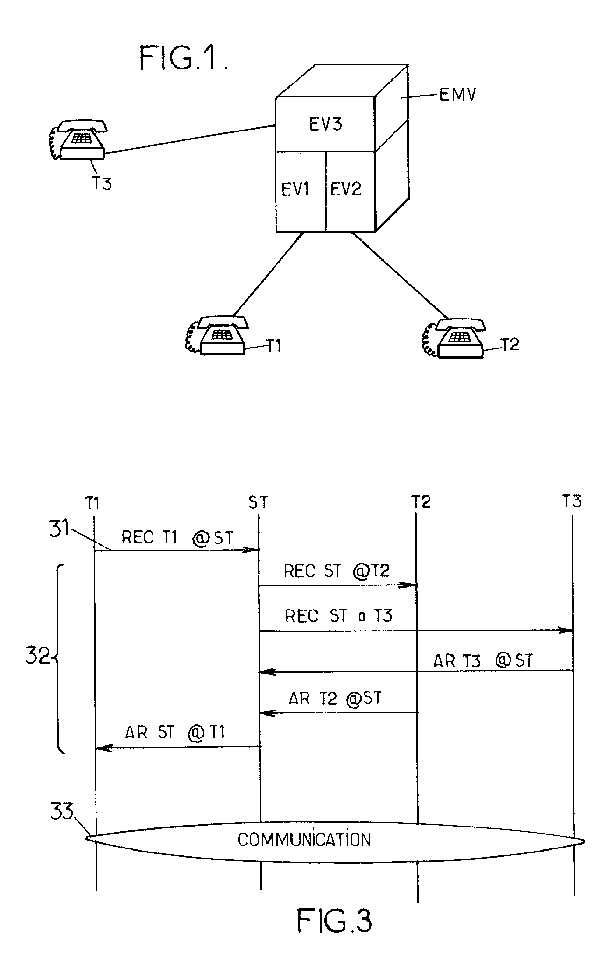

Sur les figures et dans la suite, les mêmes éléments portent les mêmes références. A la figure 1, on a représenté un schéma illustrant le principe du procédé et du dispositif de l'invention.

L'invention est basée sur une utilisation particulière d'une entité de messagerie vocale EMV, consistant à établir une communication en mode semi-duplex (ou « Half-Duplex » en anglais) entre les terminaux de différentes personnes, via des espaces vocaux sélectivement associés à ces personnes.

Des espaces vocaux de l'entité EMV sont sélectivement associés à des personnes comprenant en particulier des utilisateurs du système de télécommunications (ci-après appelés clients) et en outre des opérateurs traducteurs. Dans un exemple, un espace de messagerie vocale est affecté en permanence à chacune de ces personnes. Néanmoins, dans certaines applications, un ou plusieurs espaces vocaux peuvent être dynamiquement affectés à ces personnes lors de l'établissement de la communication. Dans l'exemple montré à la figure, on distingue trois espaces vocaux de l'entité EMV, qui sont référencés EV1, EV2 et EV3. Ces espaces vocaux sont accessibles simultanément depuis des terminaux respectivement T1, T2 et T3 de personnes respectives. Dans un exemple, le terminal T1 et le terminal T2 sont des terminaux associés à deux clients respectifs, et le terminal T3 est un terminal associé à un opérateur traducteur.

Par terminal, on entend au sens de la présente invention tout équipement terminal d'un système de télécommunications, permettant à un utilisateur du système de recevoir et émettre des données de toutes natures (données, audio et/ou vidéo). Il peut s'agir par exemple de postes téléphoniques, de téléphones portables, de téléphones portatifs sans fil associés à une base (par exemple téléphones DECT), d'un ordinateur, d'un assistant numérique personnel (ou PDA de l'anglais « Personal Digital Assistant »), etc.

Par communication en mode semi-duplex, via des espaces vocaux d'une entité de messagerie vocale on entend, au sens de la présente invention, un échange de messages vocaux entre des personnes auxquelles sont associées des espaces vocaux respectifs, suivant lequel, pour « parler », un utilisateur (ci-après le client destinateur) dépose un message vocal dans l'espace vocal associé à une ou plusieurs autres personnes (ci-après les clients destinataires), et suivant lequel, pour « écouter », un client destinataire consulte (c'est-à-dire écoute) le message vocal ainsi déposé dans son espace vocal associé. Afin de se rapprocher au maximum des conditions d'une conversation réelle, il va sans dire que les utilisateurs et le traducteur peuvent simultanément accéder, respectivement en consultation et en dépôt, à l'espace vocal associé du traducteur afin d'écouter automatiquement les messages traduits même si leur traduction n'est pas totalement achevée.

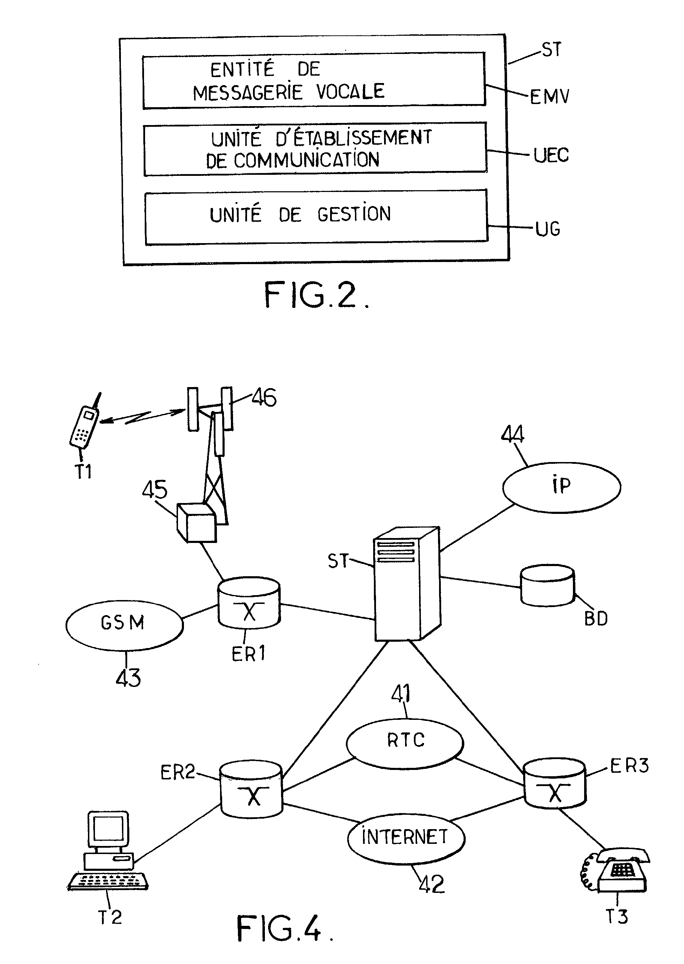

Le schéma bloc de la figure 2 montre un dispositif ST selon l'invention. Ce dispositif appartient à un système de télécommunications auquel appartiennent aussi les terminaux T1 à T3. Il comprend l'entité de messagerie vocale EMV précitée. Il comprend en outre une unité d'établissement de communication UEC pour établir une communication entre des terminaux, tels que T1 à T3, via des espaces vocaux de l'entité EMV, tels que EV1 à EV3 respectivement. Le dispositif ST comprend enfin une unité de gestion UG permettant de gérer l'entité de messagerie vocale EMV en réponse à des actions des personnes participant à la communication via leurs terminaux respectifs.

Pour accéder à son ou à ses espaces vocaux associé(s), chaque personne, client ou opérateur traducteur, effectue des actions déterminées au moyen de l'interface homme-machine propre à son terminal. Dans le cas d'un téléphone, la personne peut ainsi entrer des commandes par l'intermédiaire du clavier du téléphone, ou entrer des commandes vocales qui sont reconnues et interprétées par un dispositif de reconnaissance vocale de l'entité EMV. Dans le cas d'un ordinateur ou d'un assistant numérique personnel, la personne entre des commandes par l'intermédiaire du clavier du terminal, de la souris, d'un écran tactile ou similaire.

Le fonctionnement de l'entité EMV ne présente pas de particularités notables, en ce sens qu'elle présente les fonctionnalités habituelles d'une messagerie vocale. En particulier, des commandes appropriées permettent aux utilisateurs de déposer des messages vocaux dans les espaces vocaux de l'entité EMV, de consulter des messages vocaux déposés dans leur espace vocal associé, d'effectuer des retours en arrière ou des bonds en avant lors de la lecture d'un message, de réécouter, sauvegarder ou effacer des messages déposés dans leur espace vocal associé, etc. L'entité de messagerie vocale présente entre autres la particularité de comporter des espaces vocaux accessibles simultanément en dépôt et en consultation par plusieurs utilisateurs. Un mode d'écoute en flux permanent peut également être mis en oeuvre. D'autres particularités tenant à la gestion de l'entité EMV selon l'invention apparaîtront plus loin.

Sur le diagramme de la figure 3, on a illustré une procédure d'établissement d'une communication entre un terminal T1 et des terminaux T2 et T3 selon l'invention.

Cette procédure est mise en oeuvre par l'unité UEC du dispositif ST, ici à l'initiative de l'utilisateur du terminal T1. Dans cet exemple, on considère que l'utilisateur du terminal T1 est un premier client s'exprimant par exemple en français, qui désire communiquer avec l'utilisateur du terminal T2, qui est un second client s'exprimant par exemple en anglais. A cet effet, le premier client désire bénéficier d'une aide à la communication avec le second client, qui lui est fournie par l'opérateur du système de télécommunications sous la forme d'un service de traduction.

Le premier client entre alors des commandes via son terminal T1 pour transmettre une requête d'établissement de communication 31. Cette requête prend la forme d'un message RECT1@ST qui est transmis par le terminal T1 au dispositif ST par l'intermédiaire des moyens de transmission du système de télécommunications. Ce message contient des paramètres tels qu'un identificateur du terminal T2 du second client (par exemple un numéro de téléphone s'il s'agit d'un téléphone, une adresse IP (« Internet Protocol ») s'il s'agit d'un ordinateur, etc.), la langue du message à traduire, et celle dans laquelle il faut le traduire, etc.

En réponse à cette requête 31, le dispositif ST exécute une procédure d'établissement de communication 32 afin d'établir la communication entre le terminal T1 du premier client, le terminal T2 du second client, et le terminal T3 d'un opérateur traducteur qui est un opérateur compétent pour la traduction de messages du français vers l'anglais, et en général également de l'anglais vers le français. L'opérateur traducteur est sélectionné parmi une pluralité d'opérateurs traducteurs disponibles, en fonction de critères de sélection contenus dans la requête 31 en tant que paramètres du message REG1@ST. Des identificateurs (numéro de téléphone, adresse IP, ou autre) des terminaux de ces opérateurs traducteurs sont sauvegardés dans une base de données appropriée du dispositif ST. Des informations relatives aux opérateurs traducteurs sont également sauvegardées dans la base de données (par exemple des informations sur leur disponibilité, sur la ou les langue(s) qu'ils peuvent traduire sur leur(s) domaine(s) technique(s) dans lequel ou dans lesquels ils sont le plus expérimentés, etc.).

La procédure 32 comprend l'envoi par le dispositif ST d'un message RECST@T2 est un message RECST@T3 à destination respectivement des terminaux T2 et T3 afin d'établir la communication avec ces derniers.

Lorsqu'ils sont prêts pour l'établissement de la communication, le terminal T2 et le terminal T3 répondent à l'émission de ces messages par l'émission vers le dispositif ST de messages d'accusé de réception respectivement ART2@ST et ART3@ST.

Une fois ces messages d'accusé de réception reçus, le dispositif ST émet à destination du terminal T1 un message d'accusé de réception ARST@T1, ce qui établit la communication 33 entre les terminaux T1, T2 et T3 via les espaces vocaux EV1, EV2 et EV3 sélectivement associés au premier client, au second client, et à l'opérateur traducteur respectivement.

L'entité de messagerie vocale EMV est alors gérée par l'unité de gestion UG du dispositif ST, pendant la communication, en réponse à des actions du premier et du second client ainsi que de l'opérateur traducteur via leurs terminaux T1, T2 et T3 respectifs. Il s'agit d'une communication en mode semi-duplex via les espaces vocaux EV1, EV2, et EV3 de l'entité EMV par laquelle le premier et le second client échangent des messages vocaux par l'intermédiaire de l'espace vocal EV3 associé à l'opérateur traducteur afin de permettre à celui-ci de traduire les messages vocaux et de déposer les messages vocaux dans l'espace vocal associé un terminal du client destinataire.

Dans un exemple, considérons que le premier client désire émettre un message vocal à destination du second client. De ce fait, le premier client est appelé dans la suite client destinateur et le second client est appelé client destinataire. Grâce à l'unité de gestion UG, le client destinateur dépose le message dans l'espace vocal EV3 de l'opérateur traducteur. Ce dernier traite le message vocal en le lisant dans son espace vocal EV3 associé. Le traitement comprend dans l'exemple une traduction de ce message vocal du français vers l'anglais.

De préférence, l'entité EMV permet à l'opérateur traducteur de traiter ce message vocal par segment. Par segment d'un message vocal, on entend au sens de la présente invention une partie du message qui présente une unité grammaticale ou sémantique, par exemple. Il peut s'agir notamment d'une phrase, ou d'une portion de phrase, ou encore d'un ensemble de phrases liées entre elles par leur contenu informationnel. Les segments du message vocal sont séparés par des repères (« LABEL » en anglais) ad-hoc. Il peut en particulier s'agir de marqueurs insérés par le client destinateur via son terminal, par exemple en appuyant sur une touche ou une combinaison de touches appropriées au cours de l'énoncé du message vocal. Dans le mode d'écoute en flux permanent, l'écoute par le destinataire d'un segment partiellement traduit est possible. La taille du segment varie alors de 0 seconde au temps total recouvrant la durée d'un message. Il peut aussi s'agir de marqueurs générés automatiquement, par exemple à chaque fois que le message contient une pause (un blanc) de durée significative. De préférence, il s'agit néanmoins de marqueurs insérés dans le message vocal à l'initiative de l'opérateur traducteur, en réponse à des actions appropriées effectuées par celui-ci via son terminal (tel que l'appui sur une touche ou une combinaison de touches). L'opération traducteur peut ainsi définir lui-même la césure entre les segments du message.

Cette segmentation, ou découpage en segments du message vocal à traduire, permet à l'opérateur traducteur de simplifier son travail. Elle lui permet en outre d'effectuer des retours en arrière en se positionnant automatiquement sur un marqueur séparant deux segments consécutifs du message.

L'opérateur traducteur dépose alors au fil de l'eau, soit de manière globale, soit par segments ou par groupe de segments, un message (ci-après message traduit) correspondant à la traduction dans une autre langue (ici l'anglais) du message traité, dans l'espace vocal EV2 associé au terminal T2 du client destinataire. Dans certains cas, on peut prévoir que le message traduit soit aussi déposé dans l'espace vocal EV1 associé au terminal T1 du client destinateur. Ceci permet à ce dernier de vérifier que le message traduit a bien été remis au client destinataire. Cela lui permet en outre, dans certains cas, de vérifier la cohérence de la traduction avec le message d'origine (si toutefois ses connaissances linguistiques lui permettent une telle vérification).

Dès que la traduction est commencée, l'unité de gestion UG permet alors au client destinataire de lire le message traduit en accédant à son espace vocal associé EV2 depuis son terminal T2. Chaque espace vocal comprend plusieurs zones, dont au moins une zone de dépôt et une zone de consultation. Le même espace peut alternativement être zone de dépôt ou zone de consultation mais il n'y a pas de recouvrement entre les messages enregistrés sur ces zones. Le traducteur est le seul intervenant à pouvoir piloter l'intercommunication entre ces zones.

L'invention a été décrite ci-dessus dans un exemple relativement simple, en montrant que les moyens d'établissement de la communication permettent d'établir une communication dite "bi-personnelle" ou communication individuelle, c'est-à-dire une communication entre deux clients et au moins un opérateur traducteur. Dans une telle configuration, l'un des deux clients joue successivement le rôle de client destinateur et de client destinataire, et l'autre joue successivement le rôle, respectivement, de client destinataire et de client destinateur. Les clients destinateurs et destinataires n'accèdent en consultation qu'à la traduction. Toutefois dans certains cas, il leur est possible d'entendre la voix de leur correspondant. Ils doivent pour cela utiliser des touches de commande de leurs terminaux respectifs.

Le principe de l'invention est néanmoins plus général, et ne se limite pas à cette seule configuration.

En effet, les moyens d'établissement de la communication permettent aussi d'établir une communication dite "mono-personnelle", c'est-à-dire une communication entre un et un seul client et au moins un opérateur traducteur, ledit client jouant successivement le rôle de client destinateur et de client destinataire. Cette configuration permet au client de préparer une véritable conversation orale, en obtenant à l'avance une traduction des phrases qu'il prévoit de dire à son ou à ses interlocuteur(s).

Par ailleurs, les moyens d'établissement de la communication permettent aussi d'établir une communication "multi-personnelle" ou communication de groupe, c'est-à-dire une communication entre plus de deux clients et au moins un opérateur traducteur. Dans une telle configuration, l'un des clients joue successivement le rôle de client destinateur et de client destinataire et les autres jouent successivement le rôle, respectivement, de clients destinataires et/ou de client destinateur.

Lorsque participent à la communication de groupe des clients s'exprimant dans plus de deux langues distinctes respectives, par exemple le français, l'anglais et l'allemand, les moyens d'établissement de la communication permettent d'établir une communication à laquelle participent en outre plusieurs opérateurs traducteurs associés à ces langues respectives. Dit autrement, pour l'établissement d'une telle communication de groupe, on sélectionne plusieurs opérateurs traducteurs parmi la pluralité d'opérateurs traducteurs disponibles précitée, en fonction de critères de sélection contenus dans la requête d'établissement de communication 31.

La figure 4 montre de façon schématique un système de télécommunications incorporant un dispositif ST pour la mise en oeuvre du procédé selon l'invention.

Le système de télécommunications comprend les terminaux T1, T2 et T3. Dans l'exemple représenté, le terminal T1 est un téléphone portable, le terminal T2 est un ordinateur équipé d'un modem et le terminal T3 est un téléphone.

Le dispositif ST est relié aux terminaux T1 à T3 via des équipements de routage de messages respectivement référencés ER1, ER2 et ER3 dans l'exemple. L'équipement ER1 est relié aux équipements fixes d'un réseau de radiocommunications avec les mobiles 43 tel que le GSM (« Global System for Mobile communication ») ou UMTS (« Universal Mobile Telecommunication System ») et en particulier à une station de base 45 couplée à une antenne 46 pour assurer l'interface radio avec le terminal T1. Les équipements ER2 et ER3 sont par exemple connectés aux équipements d'un réseau téléphonique 41 tel que le réseau téléphonique commuté (RTC), et en outre aux équipements d'un réseau de données 42 tel que le réseau Internet.

Le dispositif ST est en outre relié à une base de données BD dans laquelle sont stockés les identificateurs des opérateurs traducteurs de la pluralité d'opérateurs traducteurs précitée, ainsi que des données relatives à leur disponibilité, la ou les langues qu'ils peuvent traduire, leur(s) domaine(s) d'intervention (notamment les sujets techniques sur lesquels ils sont plus particulièrement compétents, etc.) et plus généralement toutes données nécessaires au fonctionnement du dispositif.

Le dispositif ST est en outre relié à un réseau de données 44, tel qu'un réseau IP (« Internet Protocol ») par exemple, pour l'échange de données avec d'autres équipements, en vue notamment de la facturation du service.

Dans un premier exemple de réalisation, le dispositif ST et les équipements de routage de messages ER1, ER2, ER3 sont réalisés respectivement en tant que point de commande de service et en tant que points d'accès au service d'un réseau intelligent du système de télécommunications.

Dans un autre mode de réalisation, le dispositif ST et les équipements de routage de messages ER1, ER2, ER3 sont réalisés respectivement en tant que serveur informatique et en tant que commutateur public ou privé du système de télécommunications.

## Revendications

1. Procédé d'aide à la communication interpersonnelle pour les utilisateurs d'un système de télécommunications, comprenant les étapes consistant à :
- établir une communication en mode semi-duplex (33) entre des terminaux respectifs (T1, T2, T3) d'un ou plusieurs clients et d'au moins un traducteur, via des espaces vocaux (EV1, EV2, EV3) d'une entité de messagerie vocale (EMV) simultanément accessibles en consultation et en dépôt depuis différents terminaux, et sélectivement associés audits clients et audit traducteur, en réponse à une requête d'établissement de communication (31) exécutée par un client ; et,
- gérer l'entité de messagerie vocale (EMV) en réponse à des actions d'un client destinateur, d'un client destinataire et/ou du traducteur via leurs terminaux (T1, T2, T3) respectifs, de manière à permettre au client destinateur de déposer dans l'espace vocal associé au traducteur un premier message vocal déterminé, à permettre en outre au traducteur de déposer dans l'espace vocal associé au client destinataire un second message vocal déterminé correspondant à la traduction dans une autre langue dudit premier message vocal déterminé, et enfin à permettre au client destinataire de consulter ledit second message vocal déterminé dans l'espace vocal associé audit client destinataire.

2. Procédé selon la revendication 1, suivant lequel la gestion de l'entité de messagerie vocale permet au traducteur de traiter par segments le message vocal déposé dans son espace vocal associé.

3. Procédé selon la revendication 2, suivant lequel la gestion de l'entité de messagerie vocale permet au traducteur de définir lui-même la césure entre lesdits segments.

4. Procédé selon l'une quelconque des revendications précédentes, suivant lequel, pour l'établissement de la communication, on sélectionne le traducteur parmi une pluralité de traducteurs disponibles, en fonction de critères de sélection contenus dans la requête d'établissement de communication.

5. Procédé selon l'une quelconque des revendications précédentes, suivant lequel, dans le cas d'une communication dite "mono-personnelle", établie entre un et un seul client et au moins un traducteur, ledit client joue successivement le rôle de client destinateur et de client destinataire.

6. Procédé selon l'une quelconque des revendications précédentes, suivant lequel, dans le cas d'une communication dite 'bi-personnelle", établie entre deux clients et au moins un traducteur, l'un desdits clients joue successivement le rôle de client destinateur et de client destinataire et l'autre joue successivement le rôle, respectivement, de client destinataire et de client destinateur.

7. Procédé selon l'une quelconque des revendications précédentes, suivant lequel, dans le cas d'une communication dite "multi-personnelle", établie entre plus de deux clients et au moins un traducteur, l'un desdits clients joue successivement le rôle de client destinateur et de client destinataire et les autres jouent successivement le rôle, respectivement, de clients destinataires et/ou de client destinateur.

8. Procédé selon l'une quelconque des revendications précédentes, suivant lequel, pour l'établissement d'une communication "multi-personnelle" à laquelle participent des clients employant plus de deux langues différentes, on sélectionne plusieurs traducteurs parmi une pluralité de traducteurs disponibles, en fonction de critères de sélection contenus dans la requête d'établissement de communication.

9. Dispositif (ST) d'aide à la communication interpersonnelle pour les utilisateurs d'un système de télécommunications, comprenant :
- une entité de messagerie vocale (EMV) ayant des espaces vocaux (EV1, EV2, EV3) simultanément accessibles en consultation et en dépôt depuis différents terminaux du système de télécommunications ;
- des moyens (UEC) pour exécuter une procédure d'établissement de communication (32) permettant d'établir une communication en mode semi-duplex (33) entre des terminaux (T1, T2, T3) d'un ou plusieurs clients et d'au moins un traducteur, via des espaces vocaux de l'entité de messagerie vocale sélectivement associés audits clients et audit traducteur, en réponse à une requête d'établissement de communication exécutée par un client ; et,
- des moyens (UG) de gestion de l'entité de messagerie vocale en réponse à des actions d'un client destinateur, d'un client destinataire et/ou du traducteur via leurs terminaux respectifs, permettant au client destinateur de déposer dans l'espace vocal associé au traducteur un premier message vocal déterminé, permettant en outre au traducteur de déposer dans l'espace vocal associé au client destinataire un second message vocal déterminé correspondant à la traduction dans une autre langue dudit premier message vocal déterminé, et permettant enfin au client destinataire de consulter ledit second message vocal déterminé dans l'espace vocal associé audit client destinataire.

10. Dispositif selon la revendication 9, dans lequel les moyens de gestion (UG) permettent au traducteur de traiter par segments le message vocal déposé dans son espace vocal associé.

11. Dispositif selon la revendication 10, dans lequel les moyens de gestion permettent au traducteur de définir lui-même la césure entre lesdits segments.

12. Dispositif selon l'une quelconque des revendications 9 à 11, dans lequel les moyens d'établissement de la communication permettent de sélectionner le traducteur, parmi une pluralité de traducteurs disponibles, en fonction de critères de sélection contenus dans la requête d'établissement de communication (31).

13. Dispositif selon l'une quelconque des revendications 9 à 12, dans lequel les moyens (UEC) d'établissement de la communication permettent d'établir une communication dite "mono-personnelle" entre un et un seul client et au moins un traducteur, ledit client jouant successivement le rôle de client destinateur et de client destinataire.

14. Dispositif selon l'une quelconque des revendications précédentes, dans lequel les moyens (UEC) d'établissement de la communication permettent d'établir une communication dite "bi-personnelle" entre deux clients et au moins un traducteur, l'un desdits clients jouant successivement le rôle de client destinateur et de client destinataire et l'autre jouant successivement le rôle, respectivement, de client destinataire et de client destinateur.

15. Dispositif selon l'une quelconque des revendications précédentes, dans lequel les moyens (UEC) d'établissement de la communication permettent d'établir une communication dite "multi-personnelle" entre plus de deux clients et au moins un traducteur, l'un desdits clients jouant successivement le rôle de client destinateur et de client destinataire et les autres jouant successivement le rôle, respectivement, de clients destinataires et/ou de client destinateur.

16. Dispositif selon l'une quelconque des revendications précédentes, dans lequel, les moyens (UEC) d'établissement de la communication permettent d'établir une communication de groupe à laquelle participent plusieurs traducteurs associés à des langues respectives.

17. Système de télécommunications, notamment système public ou privé de télécommunications filaire et/ou radio, comprenant des terminaux d'utilisateurs (T1, T2, T3) et un dispositif (ST) selon l'une quelconque des revendications 9 à 16 relié audits terminaux via des équipements de routage de messages (ER1, ER2, ER3).

18. Système selon la revendication 17, dans lequel le dispositif (ST) et les équipements de routage de messages (ER1,ER2,ER3) sont réalisés respectivement en tant que point de commande de service et en tant que points d'accès au service d'un réseau intelligent du système de télécommunications.

19. Système selon la revendication 17, dans lequel le dispositif (ST) et les équipements de routage de messages (ER1,ER2,ER3) sont réalisés respectivement en tant que serveur informatique et en tant que commutateur public ou privé du système de télécommunications.
